## Europäisches Patentamt
## European Patent Office
## Office européen des brevets

(11) Veröffentlichungsnummer: **0 042 016**
**B1**

(12) # EUROPÄISCHE PATENTSCHRIFT

(45) Veröffentlichungstag der Patentschrift:
**31.10.84**

(51) Int. Cl.³: **F 16 C 17/10, F 01 D 25/16**

(21) Anmeldenummer: **80200559.5**

(22) Anmeldetag: **16.06.80**

(54) **Wellenlagerung.**

(43) Veröffentlichungstag der Anmeldung:
**23.12.81 Patentblatt 81/51**

(45) Bekanntmachung des Hinweises auf die Patenterteilung:
**31.10.84 Patentblatt 84/44**

(84) Benannte Vertragsstaaten:
**CH DE FR LI NL SE**

(56) Entgegenhaltungen:
**CH - A - 427 855**
**DE - A - 2 054 465**
**DE - B - 1 216 322**
**DE - C - 1 003 228**
**DE - U - 1 903 535**
**FR - A - 1 332 074**
**FR - A - 1 338 871**
**US - A - 2 384 589**

(73) Patentinhaber: **BBC Aktiengesellschaft Brown, Boveri & Cie., Haselstrasse, CH-5401 Baden (CH)**

(72) Erfinder: **Bellati, Hans, Titlisstrasse 9, CH-5430 Wettingen AG (CH)**

BUNDESDRUCKEREI BERLIN

## Beschreibung

Die vorliegende Erfindung betrifft eine Lagerung für rotierende Maschinen, insbesondere für Wellen von mehrstufigen Turbinen, bestehend aus mindestens einem Traglager und einem Kammlager.

Je nach dem Betriebszustand, d. h. beim Hochfahren, bei Belastung, bei Leerlaufbetrieb oder beim Abstellen und selbst im Stillstand treten bei Turbomaschinen Dehnungen in axialer Richtung auf, wobei diese Axialdehnungen von Welle und Gehäuse verschieden groß sein können. Je länger eine derartige Turbogruppe und je größer der Temperaturgradient bei Laständerung ist, umso größer sind auch die Unterschiede in der Längsdehnung zwischen Welle und Gehäuse. Um derartige Dehnungsdifferenzen auszugleichen, können die Axialspiele entsprechend vergrößert werden, was jedoch zu Wirkungsgradverlusten führt.

Damit die Axialspiele möglichst klein gehalten werden können, wurde bereits vorgeschlagen, die Kammlagergehäuse mit dem Turbinengehäuse zu verbinden, so daß dadurch die unterschiedliche Längsdehnung zwischen der Welle und dem Gehäuse kompensiert werden kann.

Derartige Ausbildungen sind jedoch nur in begrenztem Maße, bzw. bis zu bestimmten Turbinengrößen möglich, da sonst die am Kammlager-Gehäuse angreifenden Kräfte so groß werden, daß sie ein Anheben und/oder Blockieren des Gehäuses bewirken, was zu einer Havarie führen kann.

Weiterhin ist aus der CH-A-427 855 eine Lagerung für eine Turbinenwelle bekanntgeworden, die aus einem Traglager und einem Kammlager besteht und wobei beide Lager in einem gemeinsamen Lagergehäuse angeordnet sind, wobei jedoch keine für beide Lager gemeinsame Ölversorgung vorgesehen ist. Zum Ausgleich des Achsschubes sind am Lagergehäuse anliegende Ringfedern so angeordnet, daß zur Messung des Achsschubes Meßspalte entstehen. Dazu werden am Lagergehäuse Meßwertgeber angebracht.

Es ist Aufgabe der vorliegenden Erfindung, eine Lageranordnung zu schaffen, welche sich nicht nachteilig auf die Länge des gesamten Wellenstranges auswirken kann und bei welcher auch bei Großturbogruppen ein Anheben des Turbinengehäuses nicht auftreten kann.

Die vorgenannte Aufgabe wird erfindungsgemäß mit den kennzeichnenden Merkmalen des Patentanspruchs 1 gelöst.

Durch die erfindungsgemäße Ausbildung eines kombinierten Kamm- und Traglagers bildet das Lagergehäuse mit dem Traglager eine Einheit, welche mit dem Turbinenfundament starr verbunden ist, während das Kammlager in den Axialbewegungen frei bleibt.

Weitere vorteilhafte Ausbildungsformen ergeben sich aus den Unteransprüchen, wobei beispielsweise durch die Anordnung einer Schubstange zwischen dem Kammlagerträger und dem Turbinengehäuse eine Verringerung der Differenzdehnung zwischen der Welle und dem Turbinengehäuse erzielt werden kann.

Ferner wird durch die Anordnung eines Führungskeiles zwischen der Kammlagerhalterung und dem Lagergehäuse eine Längsführung für die Lagerhalterung erreicht.

In der Zeichnung ist ein Ausführungsbeispiel der erfindungsgemäßen Lagerung vereinfacht dargestellt. Es zeigt

Fig. 1 einen Längsschnitt durch eine kombinierte Ausbildung eines Kamm-/Traglagers,

Fig. 2 einen Querschnitt durch die Lagerung entlang der Schnittlinie A-A in Fig. 1.

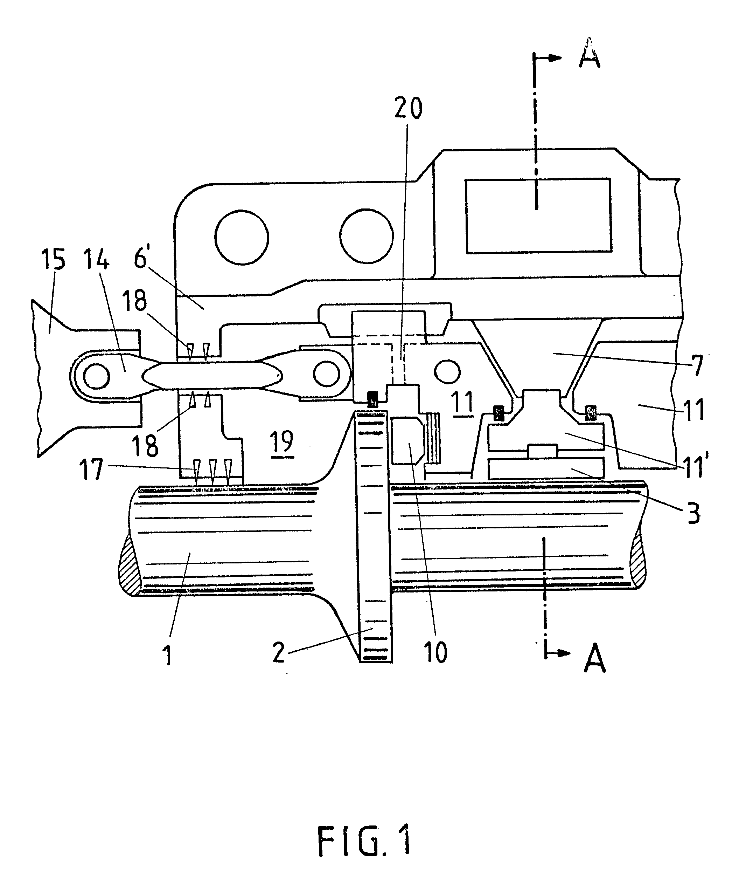

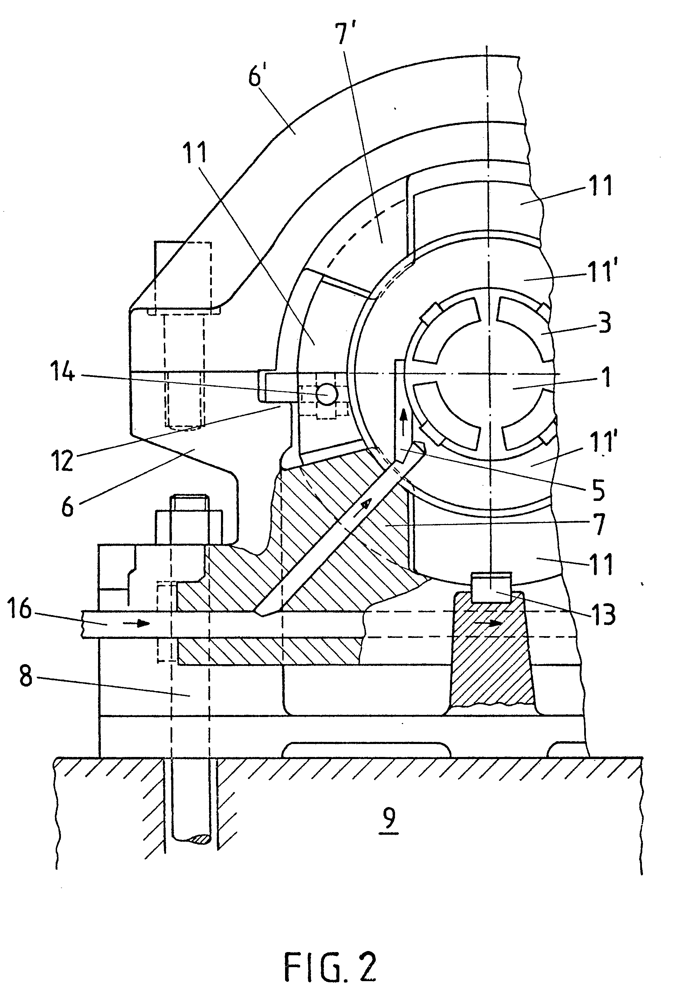

Gemäß der Fig. 1 und 2 ist mit 1 eine Turbinenwelle mit einem Wellenkamm 2 bezeichnet, welche in einer Lagerschale 3, welche auch als Segmentlager ausgebildet sein kann und als Traglager dient, gelagert ist. Die Lagerschale 3 bzw. das Segmentlager ist in einem geteilten Lagerträger 11' gehalten, wobei im Lagerträger 11' gleichzeitig Schmierölkanäle 5 zur Versorgung der Lagerschale 3 mit Schmieröl aufweist. Ein Lagergehäuse-Unterteil 6 und ein Lagergehäusedeckel 6' weisen Halterungen 7, 7' auf, welche den Lagerträger 11' spiellos umfassen und halten. Von der Welle 1 kommende Kräfte werden über die Lagerschale 3, den Lagerträger 11' und die Halterungen 7, 7' zum Lagergehäuse 6, 6' über Fundamentschrauben 8 in ein Turbinenfundament 9 eingeleitet.

Der Wellenkamm 2 der Turbinenwelle 1 ist in axialer Richtung an einem Kammlager 10, welches ebenfalls aus einzelnen Lagersegmenten bestehen kann, gelagert. Das Kammlager 10 ist im Lagerträger 11 eingebaut, welcher sich im Lagergehäuse-Unterteil 6 auf eine Nase 12 abstützt und in Achsrichtung durch einen Keil 13 geführt wird.

Zur Verringerung der Differenzdehnung zwischen der Welle 1 und einem (nicht dargestellten) Turbinengehäuse wird eine Schubstange 14 an einer Gehäusepratze 15 und am Lagerträger 11 angeordnet; auf diese Weise werden die Gehäusedehnungen über den Lagerträger 11 und das Kammlager 10 zur Welle 1 geleitet werden.

Die erforderliche Schmiermittelmenge wird über eine Schmiermittelzufuhr 16 zu den Schmierölkanälen 5 geleitet. Zwischen dem Lagergehäuse 6, 6' und der Welle 1 sind Abstreifringe 17 und zwischen der Schubstange 14 und dem Lagergehäuse 6' sind Dichtungen 18 angeordnet, welche einen Ölablaufraum 19 am Kammlager 10 nach außen hin abdichten, ohne die Beweglichkeit des Turbinengehäuses gegenüber der Turbinenwelle 1 bzw. des Lagerträgers 11 zu beeinträchtigen. Der Schmiermittelaustritt aus dem kombinierten Trag-Kammlager erfolgt über Austrittsöffnungen 20, welche über den Umfang im Lagergehäuse 11 verteilt sind.

Durch die erfindungsgemäße Lagerausbildung bildet das Lagergehäuse 6, 6' mit dem Traglager 3 eine Einheit, während das im gleichen Lagerträger 11 angeordnete Kammlager 10 frei beweglich bleibt.

## Patentansprüche

1. Lagerung für rotierende Maschinen, insbesondere für Wellen mehrstufiger Turbinen, wobei in einem gemeinsamen Lagergehäuse (6, 6') mindestens ein Traglager (3) und ein Kammlager (10) in je einem Lagerträger (11, 11') angeordnet sind, dadurch gekennzeichnet, daß das Lagergehäuse (6, 6') Halterungen (7, 7') für den Lagerträger (11') des Traglagers (3) aufweist, welche Halterungen (7, 7') den Lagerträger (11) des Kammlagers (10) berührungslos durchdringen, und daß das Traglager (3) unabhängig vom Kammlager (10) über das Lagergehäuse (6, 6') an einem Fundament (9) abgestützt ist und der Lagerträger (11) des Kammlagers (10) den Lagerträger (11') des Traglagers (3) umschließt und am Lagergehäuse (6, 6') abgestützt ist.

2. Lagerung nach Anspruch 1, dadurch gekennzeichnet, daß für das Kammlager (10) und das Traglager (3) eine gemeinsame Ölversorgung (5) vorgesehen ist.

3. Lagerung nach Anspruch 1, dadurch gekennzeichnet, daß zwischen dem Lagerträger (11) des Kammlagers (10) und dem Turbinengehäuse eine Schubstange (14) zur Übertragung der Axialbewegungen angeordnet ist.

4. Lagerung nach Anspruch 1, dadurch gekennzeichnet, daß zwischen der Halterung des Kammlagers (10) und dem Lagergehäuse (6) ein Führungskeil (13) angeordnet ist.

## Claims

1. Bearing arrangement for rotating machines, in particular for the shafts of multi-stage turbines, wherein, in a common bearing housing (6, 6'), at least one support bearing (3) and one multi-collar thrust bearing (10) are each located in a bearing carrier (11, 11'), characterised in that the bearing housing (6, 6') has retention features (7, 7') for the bearing carrier (11') of the support bearing (3), which retention features (7, 7') penetrate the bearing carrier (11) of the multi-collar thrust bearing (10) without touching it, and that the support bearing (3) is supported independent of the multi-collar thrust bearing (10) via the bearing housing (6, 6') on a foundation (9) and the bearing carrier (11) of the multi-collar thrust bearing (10) surrounds the bearing carrier (11') of the support bearing (3) and is supported on the bearing housing (6, 6').

2. Bearing arrangement in accordance with claim 1, characterised in that a common oil supply (5) is provided for the multi-color thrust bearing (10) and the support bearing (3).

3. Bearing arrangement in accordance with claim 1, characterised in that a thrust rod (14) is located between the bearing carrier (11) of the multi-collar thrust bearing (10) and the turbine housing in order to transmit axial movements.

4. Bearing arrangement in accordance with claim 1, characterised in that a guide wedge (13) is located between the retention feature of the multi-collar thrust bearing (10) and the bearing housing (6).

## Revendications

1. Palier pour machines rotatives, en particulier pour arbres de turbines à plusieurs étages, dans lequel au moins un palier de support (3) et un palier de butée (10), chacun dans un support de palier (11, 11'), sont disposés dans un corps de palier commun (6, 6'), caractérisé en ce que le corps de palier (6, 6') est pourvu d'appuis (7, 7') pour le support de palier (11') du palier de support (3), ces appuis (7, 7') traversant sans contact le support de palier (11) du palier de butée (10), et en ce que le palier de support (3) est, indépendamment du palier de butée (10), supporté par une fondation (9) par l'intermédiaire du corps de palier (6, 6') et que le support de palier (11) du palier de butée (10) entoure le support de palier (11') du palier de support (3) et est supporté par le corps de palier (6, 6').

2. Palier suivant la revendication 1, caractérisé en ce que le palier de butée (10) et le palier de support (3) comportent une alimentation en lubrifiant (5) commune.

3. Palier suivant la revendication 1, caractérisé en ce qu'entre le support de palier (11) du palier de butée (10) et l'enveloppe de la turbine est disposée une bielle (14) assurant la transmission des mouvements axiaux.

4. Palier suivant la revendication 1, caractérisé en ce qu'une clavette de guidage (13) est disposée entre l'appui du palier de butée (10) et le corps de palier (6).

FIG. 1

FIG. 2